# EUROPEAN PATENT SPECIFICATION

(11) **EP 1 689 004 B1**
(45) Date of publication and mention of the grant of the patent: **06.05.2009**
(21) Application number: 06101163.1
(22) Date of filing: 01.02.2006
(51) Int. Cl.: H01L 41/04

(54) **Control method and drive device of a piezo actuator**
Steuerungsverfahren und Steuergerät für einen Piezoaktor
Méthode de contrôle et dispositif d'excitation d'un actionneur piézoélectrique

(30) Priority: 02.02.2005 JP 2005025820; 02.02.2005 JP 2005025821
(43) Date of publication of application: 09.08.2006
(73) Proprietor: DENSO CORPORATION, Kariya-city, Aichi-pref., 448-8661 (JP)
(72) Inventor: Naruse, Hideo, Kariya-city Aichi 448-8661 (JP); Nagase, Noboru, Kariya-city Aichi 448-8661 (JP)
(74) Representative: TBK-Patent

(56) References cited:
- EP-A- 1 139 448
- EP-A- 1 489 291
- DE-A1- 10 025 579
- DE-C1- 19 652 801
- US-B1- 6 236 190

## Description

The present invention as defined by claims 1 and 16 relates to a method of indirectly measuring a displacement amount of a piezo element based on an electric state quantity of the piezo element, wherein the piezo element functions as an actuator and the displacement amount of the piezo element is controlled through repetition of increasing operation and decreasing operation of current flowing through the piezo element. The present invention also relates to a piezo actuator drive device that controls the displacement amount of the piezo element, which functions as the actuator, by repeating the increasing operation and the decreasing operation of the current flowing through the piezo element. The present invention also relates to a piezo actuator control mode adjusting method for adjusting a mode of control, through which an electric state quantity of a piezo element is controlled while current flowing through the piezo element is increased and decreased, wherein the piezo element functions as an actuator through repetition of on-operation (turning-on operation) and off-operation (turning-off operation) of a switching element in chopper control. The present invention also relates to a piezo actuator drive device that controls the electric state quantity of the piezo element while increasing and decreasing the current flowing through the piezo element, wherein the piezo element functions as the actuator through repetition of the on-operation and the off-operation of the switching element in the chopper control.

A piezo actuator has a piezo element such as a stacked body (piezo stack) that is formed by stacking multiple piezoelectric elements and that extends and contracts because of an inverse piezoelectric effect. For example, the piezo actuator is located in a fuel injector of a common rail fuel injection device of a diesel engine. The piezo actuator is a capacitive load. The piezo actuator is switched between the extended state and the contracted state by charging and discharging the piezo actuator.

A drive device of the piezo actuator charges and discharges the piezo element to extend and contract the piezo actuator. A drive device described in JP-A-H11-317551, JP-A-2002-136156, JP-A-2002-159190 or JP-A-2001-53348 controls a displacement amount of the piezo element by charging and discharging the piezo element through chopper control. When the drive device performs increasing control of the displacement amount, the drive device repeats on-off operation of a switching element provided for charging operation of the chopper control to repeat increase and decrease of current flowing through the piezo element and a series circuit of a coil. Thus, the drive device charges the piezo element. When the drive device performs decreasing control of the displacement amount, the drive device repeats on-off operation of a switching element provided for discharging operation of the shopper control to repeat increase and decrease of the current flowing through the piezo element and the series circuit of the coil. Thus, the drive device discharges the piezo element.

When the above-mentioned control is performed, voltage of the piezo element can be used to measure the displacement amount of the piezo element. However, voltage oscillation will accompany the above-mentioned control because of a resistance component of the piezo element, a piezoelectric phenomenon or the like. Therefore, the measurement value of the displacement amount measured based on the voltage will take a stepped shape or a waved shape. There is a possibility that the same measurement value is taken at different timings. Therefore, it is difficult to accurately grasp the displacement amount of the piezo element.

The drive device controls the piezo element to an intended displacement amount by controlling an electric state quantity such as voltage, which correlates with the displacement amount of the piezo element, to a suitable value.

In the case where the electric state quantity is controlled by the chopper control, the current flows through the series circuit even after the off-operation of the switching element. Accordingly, the electric state quantity fluctuates. Therefore, there is a possibility that the electric state quantity cannot be accurately controlled if the electric state quantity is controlled by the chopper control.

Document US 6 236 190 B1 discloses a method and device for driving a capacitive actuator. A constant displacement ds of a capacitive actuator, for instance a capacitor for a fuel injection valve of an internal combustion engine, is obtained within a wide temperature range. While the actuator is being charged, its current and the voltage across the actuator are multiplied with one another. The product of the current and the voltage are integrated and the integration value is compared with a predetermined setpoint value. The process of charging is interrupted when the integration value reaches or exceeds the actual value. Alternatively, the actuator is charged from a constant current source and only the voltage drop is integrated.

Document DE 100 25 579 A1 discloses a method and appliance for controlling capacitive actuator. For controlling the stroke of a capacitive actuator, e.g. a piezo actuator, the initiating charge is determined by measuring the charge voltage and current. During non-operative periods the actuator is disconnected (switch open), voltages are applied to the measuring circuits for current and voltage from an isolating amplifier and compared with a reference voltage to provide a correction factor for the next control operation.

Document DE 196 52 801 C2 discloses a driving of at least one capacitive positioning element especially piezoelectrically driven fuel injection valve for IC engine. The method involves determining the temperature dependent capacitance of the control element from the achieved control element voltage and the charging voltage. The quantity of energy fed to the control element is derived from the capacitance and the charge voltage. For the next drive cycle of the same control element the charging voltage is determined from to the difference between the predefined and delivered energy quantities. The charging capacitor is charged up to a voltage corresponding to the difference between the determined charging voltage and the instantaneous voltage applied to the recharging capacitor.

Document EP 1 139 448 A1 discloses a method and apparatus for regulating voltages and voltage gradients for driving piezoelectric elements. In particular, a method and an apparatus for a fuel injection system with a piezoelectric element for controlling the amount of injected fuel by charging and/or discharging the piezoelectric element are described, wherein the fuel injection system comprises a current flow controller for charging and/or discharging the piezoelectric element based upon the gradient of a voltage across the piezoelectric element due to a charge the piezoelectric element is carrying.

It is an object of the present invention to provide an improved piezo actuator displacement amount measuring method capable of suitably measuring a displacement amount of a piezo element, which functions as an actuator, when the displacement amount of the piezo element is controlled by repeating increasing operation and decreasing operation of current flowing through the piezo element. Furthermore, it is an object of the present invention to provide a corresponding piezo actuator drive device. In particular, it is an object of the invention to provide a control method and a drive device by means of which the influence of voltage oscillation is minimized and the contracting speed of the piezo element during a discharging processing can be measured accurately.

These objects are achieved by a control method according to claim 1 and a drive device according to claim 16. Advantageous further developments are as set forth in the respective dependent claims.

According to an aspect of the present invention, a displacement amount of a piezo element functioning as an actuator is controlled by repeating increasing operation and decreasing operation of current flowing through the piezo element. The displacement amount is indirectly measured based on an electric state quantity of the piezo element. The displacement amount in the control is measured based on a temporal integration value of a function containing at least one of the current flowing through the piezo element and voltage of the piezo element as an independent variable.

In the case where the independent variable of the function includes the voltage of the piezo element, the function correlates with the displacement amount because the voltage correlates with the displacement amount. In the case where the independent variable includes the current flowing through the piezo element, the integration value of the function correlates with the displacement amount because an integration value of the current correlates with the displacement amount. A fluctuating influence of the value of the function due to voltage oscillation and the like is suitably inhibited in the temporal integration value of the function. Therefore, the displacement amount of the piezo element can be suitably measured by using the integration value of the function.

According to another aspect of the present invention, a piezo actuator drive device controls a displacement amount of a piezo element, which functions as an actuator, by repeating increasing operation and decreasing operation of current flowing through the piezo element. The drive device measures the displacement amount in the control based on a temporal integration value of a function containing at least one of the current flowing through the piezo element and voltage of the piezo element as an independent variable.

In the case where the independent variable of the function includes the voltage of the piezo element, the function correlates with the displacement amount because the voltage correlates with the displacement amount. In the case where the independent variable includes the current flowing through the piezo element, the integration value of the function correlates with the displacement amount because the integration value of the current correlates with the displacement amount. A fluctuating influence of the value of the function due to voltage oscillation is suitably inhibited in the temporal integration value of the function. Therefore, the displacement amount can be suitably grasped based on the integration value of the function. By using the measured displacement amount, a control mode of the displacement amount can be suitably adjusted.

According to another aspect of the present invention, a piezo element functions as an actuator through repetition of on-operation and off-operation of a switching element in chopper control. A displacement amount of the piezo element is controlled by increasing and decreasing current flowing through the piezo element. An electric state quantity of the piezo element correlated with the displacement amount is measured before an end of the repetition of the on-operation and the off-operation. A mode of the control is adjusted based on a result of the measurement.

As a result, a fluctuation of the state quantity can be inhibited, and control performance of the displacement amount can be improved.

According to yet another aspect of the present invention, a piezo actuator drive device controls a displacement amount of a piezo element while increasing and decreasing current flowing through the piezo element. The piezo element functions as an actuator through repetition of on-operation and off-operation of a switching element in chopper control. The drive device measures an electric state quantity of the piezo element correlated with the displacement amount before an end of the repetition of the on-operation and the off-operation. The drive device adjusts a mode of the control based on a result of the measurement of the electric state quantity.

As a result, a fluctuation of the state quantity can be inhibited, and control performance of the displacement amount can be improved.

Features and advantages of embodiments will be appreciated, as well as methods of operation and the function of the related parts, from a study of the following detailed description, the appended claims, and the drawings, all of which form a part of this application. In the drawings:
Fig. 1 is a schematic diagram showing a diesel engine fuel injection system comprising a drive device according to a first example embodiment of the present invention;
Fig. 2 is a circuit diagram showing a drive device according to the first example embodiment;
Fig. 3 is a time chart showing a control mode of a displacement amount of a piezo element according to the first example embodiment;
Fig. 4 is a circuit diagram showing a mode of extending control of the piezo element according to the first example embodiment;
Fig. 5 is a circuit diagram showing a mode of contracting control of the piezo element according to the first example embodiment;
Fig. 6 is a time chart showing on-off operation of a charging switch in extending control of a piezo element;
Fig. 7 is a time chart showing adjustment of the extending control of the piezo element;
Fig. 8 is a time chart showing an adjusting method of the mode of the extending control according to the first example embodiment;
Fig. 9 is an equivalent circuit diagram of the piezo element according to the first example embodiment;
Fig. 10 is a time chart showing a measuring method of the displacement amount of the piezo element in the control of the displacement amount according to the first example embodiment;
Fig. 11 is a time chart showing a measuring method of the displacement amount of the piezo element in the control of the displacement amount according to the first example embodiment;
Fig. 12 is a time chart showing a measuring method of the displacement amount of the piezo element in the control of the displacement amount according to the first example embodiment;
Fig. 13 is a time chart showing transitions of voltage of a piezo element and current flowing through the piezo element;
Fig. 14 is a time chart showing a measuring method of a displacement amount according to the first example embodiment of the present invention;
Fig. 15 is a time chart showing a measuring method of a displacement amount according to the first example embodiment;
Fig. 16 is a time chart showing a measuring method of a displacement amount according to the first example embodiment;
Fig. 17 is a time chart showing a measuring method of a displacement amount according to a second example embodiment of the present invention;
Fig. 18 is a circuit diagram showing a piezo actuator drive device of a modified example of the second example embodiment;
Fig. 19 is a time chart showing on-off operation of a charging switch of a modified example of the and second example embodiments; and
Fig. 20 is a time chart showing on-off operation of a charging switch of another modified example of the first and second example embodiments.

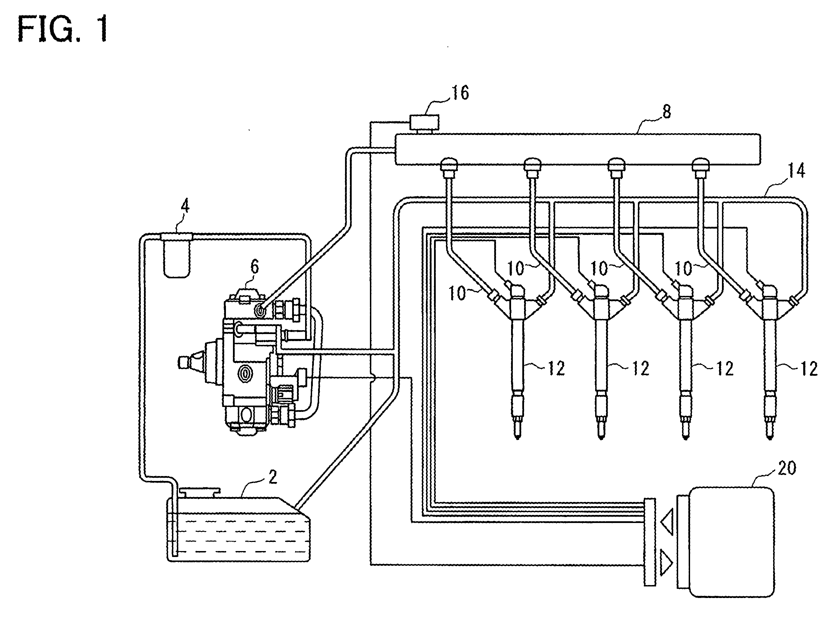

A piezo actuator displacement amount measuring method and a piezo actuator drive device according to a first example embodiment of the present invention applied to a piezo actuator of a fuel injector of a diesel engine will be explained with reference to Figs. 1 to 12.

Referring to Fig. 1, a fuel injection system for a diesel engine according to this example embodiment is illustrated. As shown in Fig. 1, fuel in a fuel tank 2 is drawn up by a feed pump included in a high-pressure fuel supply pump 6 through a fuel filter 4 and is pressure-fed to a common rail 8. The fuel accumulated in the common rail 8 in a high-pressure state is supplied to fuel injectors 12 mounted to respective cylinders of a four-cylinder diesel engine through high-pressure fuel supply pipes 10. The fuel injectors 12 are connected to a low-pressure fuel supply pipe 14 for returning leakage fuel leaking from insides of the fuel injectors 12 to the fuel tank 2.

Sensing values of various types of sensors such as a fuel pressure sensor 16 sensing a fuel pressure inside the common rail 8 are input to a control device 20. The control device 20 operates various types of actuators of the diesel engine such as the fuel injectors 12 based on the sensing values.

Next, piezo elements located in the fuel injectors 12 and the control device 20 that charges and discharges the piezo elements will be explained in detail.

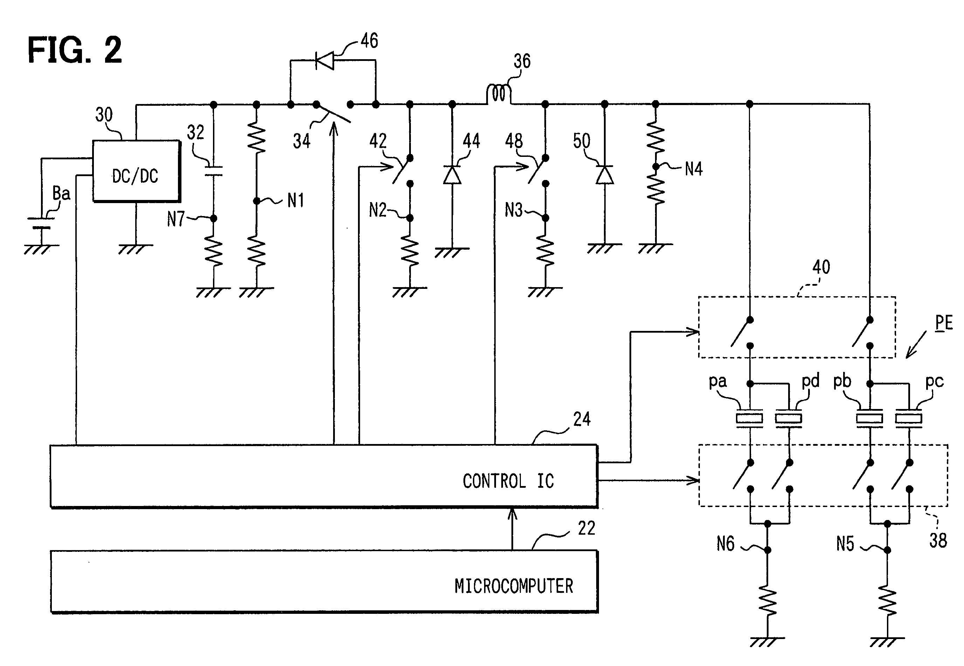

Structures of the piezo elements of the fuel injectors 12 and the control device 20 are shown in Fig. 2.

As shown in Fig. 2, each one of the piezo elements PE (piezo elements pa, pb, pc, pd of the respective cylinders) has a stacked body (piezo stack) formed by stacking multiple piezoelectric elements. The piezo stack extends and contracts because of an inverse piezoelectric effect. Thus, the piezo elements PE function as actuators. The piezo element PE is a capacitive load. The piezo element PE extends when charged, and contracts when discharged. The piezo element PE of this example embodiment uses a piezoelectric element of a piezoelectric material such as PZT (lead zirconate titanate).

Next, a drive circuit for driving the piezo elements PE will be explained.

Electricity is supplied from a buttery Ba to a DC/DC converter 30 as a voltage boost circuit. The DC/DC converter 30 boosts the voltage of the buttery Ba (for example, 12V) to a high voltage (for example, 200-300V) for charging the piezo elements PE.

The voltage boosted by the DC/DC converter 30 is applied to a capacitor 32. A terminal of the capacitor 32 is connected with the DC/DC converter 30 side and the other terminal is earthed. If the voltage boosted by the DC/DC converter 30 is applied to the capacitor 32, the capacitor 32 stores an electric charge, which is to be supplied to the piezo elements PE. The capacitor 32 should preferably have such a sufficient capacity (for example, several hundreds of microfarads) that the voltage of the capacitor 32 is not substantially changed by one time of charging processing of the piezo elements PE.

The terminal of the capacitor 32 on a high-voltage side (DC/DC converter 30 side) is connected with terminals of the piezo elements PE on a high-voltage side through a series connection body of a charging switch 34 and a charging-discharging coil 36. Terminals of the piezo elements PE on a low-voltage side are earthed.

Cylinder selection switches 38 are connected between the piezo elements pa-pd and the earth. Thus, the piezo element(s), to which charging processing or discharging processing is performed, is/are selected from the piezo elements pa-pd. A parallel circuit of the piezo elements pa, pd and a parallel circuit of the piezo elements pb, pc are connected with the charging-discharging coil 36 through bank selection switches 40 respectively. The bank selection switch 40 enables the engine to inject the fuel in the multiple cylinders at the same time or to use only two cylinders during escape running. The piezo elements pa-pd correspond to first to fourth cylinders respectively.

A terminal of a discharging switch 42 is connected to the circuit between the charging switch 34 and the charging-discharging coil 36 and the other terminal of the discharging switch 42 is earthed.

The discharging switch 42 is connected with a diode 44 in parallel. A cathode side of the diode 44 is connected to the circuit between the capacitor 32 and the charging-discharging coil 36 and an anode side of the diode 44 is earthed. The diode 44, the capacitor 32, the charging switch 34 and the charging-discharging coil 36 constitute a chopper circuit for charging the piezo elements PE. The diode 44 functions as a freewheeling diode.

A diode 46 is connected with the charging switch 34 in parallel. A cathode side of the diode 46 is connected with the capacitor 32 side, and an anode side of the diode 46 is connected with the discharging switch 42 side. The diode 46, the capacitor 32, the charging-discharging coil 36 and the discharging switch 42 constitute a chopper circuit for discharging the electric charge of the piezo elements PE. The diode 46 functions as a freewheeling diode.

A short switch 48 and a diode 50 are connected to the circuit between the charging-discharging coil 36 and the bank selection switches 40 in parallel with the piezo elements PE. The short switch 48 completely discharges the electric charge of the piezo elements PE that could not be discharged by the chopper control. The diode 50 prevents the voltage of the piezo elements PE from becoming negative.

The control device 20 shown in Fig. 1 includes a microcomputer 22 and a control IC (integrated circuits) 24 in addition to the drive circuit. The microcomputer 22 calculates control conditions of the displacement amounts of the piezo elements PE based on the sensing values of the various types of sensors sensing the operating states of the diesel engine, and outputs the control conditions to the control IC 24. The control IC 24 drives the drive circuit based on the control conditions output by the microcomputer 22. The control IC 24 and the microcomputer 22 import information such as current or voltage of the drive circuit or the piezo elements PE based on voltages at respective nodes N1-N7 of the drive circuit.

Next, control of the displacement amounts of the piezo elements PE (charging processing and discharging processing) according to this example embodiment will be explained.

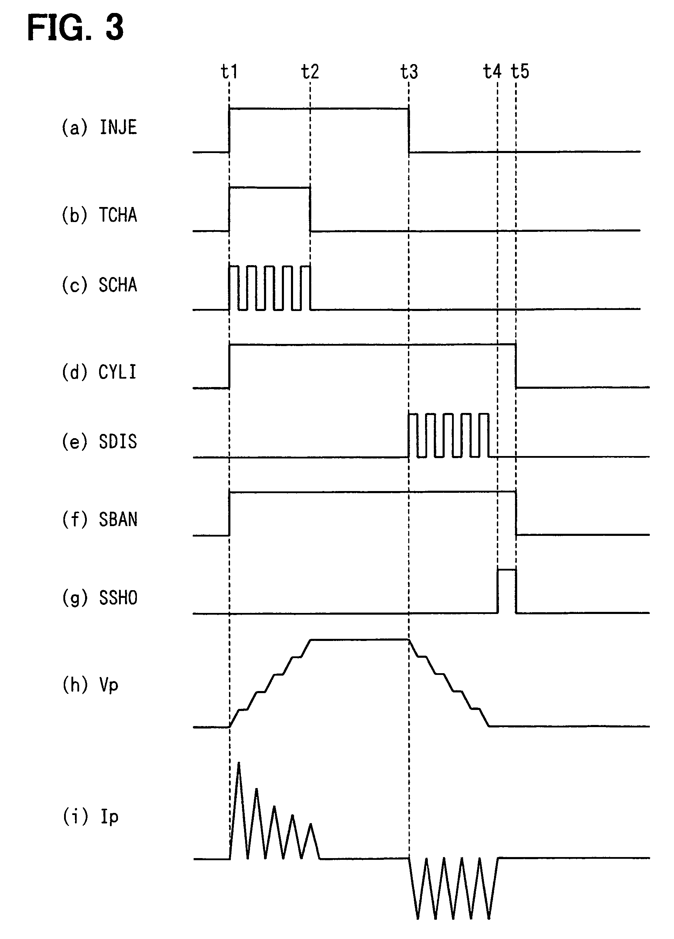

A mode of the charging processing and the discharging processing is shown in Fig. 3. Fig. 3(a) shows a transition of an injection signal INJE that is output from the microcomputer 22 to the control IC 24 and indicates an injection period. Fig. 3(b) shows a transition of a charging period signal TCHA that is output from the microcomputer 22 to the control IC 24 and indicates a charging period. Fig. 3(c) shows a transition of an operation signal SCHA of the charging switch 34. Fig. 3(d) shows a transition of an operation signal CYLI of the cylinder selection switch 38 (operation signal CYLI corresponding to the piezo element pa is shown). Fig. 3(e) shows a transition of an operation signal SDIS of the discharging switch 42. Fig. 3(f) shows a transition of an operation signal SBAN of the bank selection switch 40 (operation signal SBAN corresponding to Fig. 3(d) is shown). Fig. 3(g) shows a transition of an operation mode (operation signal SSHO) of the short switch 48. Fig. 3(h) shows a transition of voltage Vp on a high-voltage side of the piezo element PE. Fig. 3(i) shows a transition of the current Ip flowing through the piezo element PE (electric charge flowing into the piezo element PE or the electric charge flowing out of the piezo element PE).

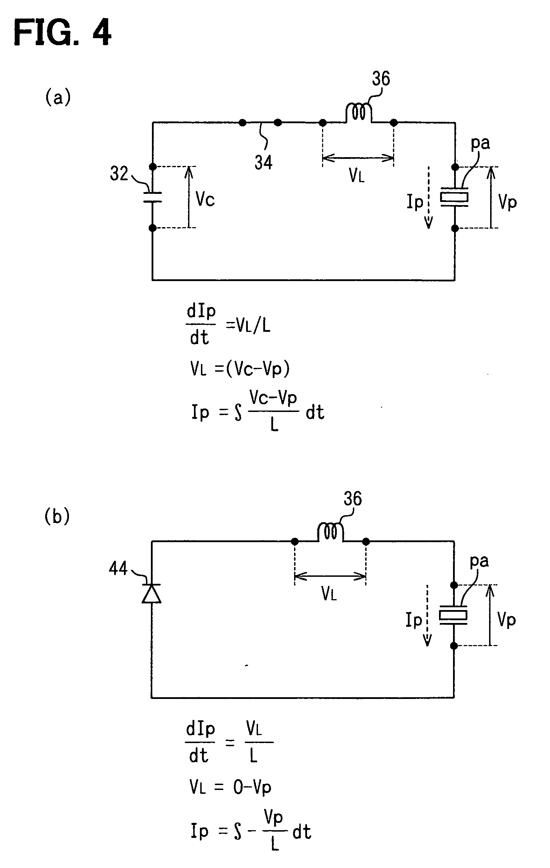

As shown in Fig. 3, the injection signal INJE and the charging period signal TCHA are output from the microcomputer 22 to the control IC 24 at timing t1. Thus, the control IC 24 starts the chopper control by on-off operation of the charging switch 34. For example, the charging switch 34 is turned on to form a closed loop circuit consisting of the capacitor 32, the charging switch 34, the charging-discharging coil 36 and the piezo element pa as shown in Fig. 4(a). Thus, the electric charge of the capacitor 32 is charged to the piezo element pa. At this time, the current Ip flowing through the piezo element pa increases as shown in Fig. 3 (current increasing operation). If the charging switch 34 is turned off after the on-operation of the charging switch 34, a closed loop circuit consisting of the charging-discharging coil 36, the piezo element pa and the diode 44 is formed as shown in Fig. 4(b). Thus, the flywheel energy of the charging-discharging coil 36 is charged to the piezo element pa. At this time, the current flowing through the piezo element pa decreases as shown in Fig. 3 (current decreasing operation). In this example embodiment, if the current Ip becomes zero, on-operation of the charging switch 34 is performed again as shown in Fig. 3.

The voltage step-down chopper control for operating the charging switch 34 in the above-explained mode is performed from the timing t1 to timing t2. Thus, the piezo element pa is charged and the voltage Vp on the high-voltage terminal side of the piezo element pa increases.

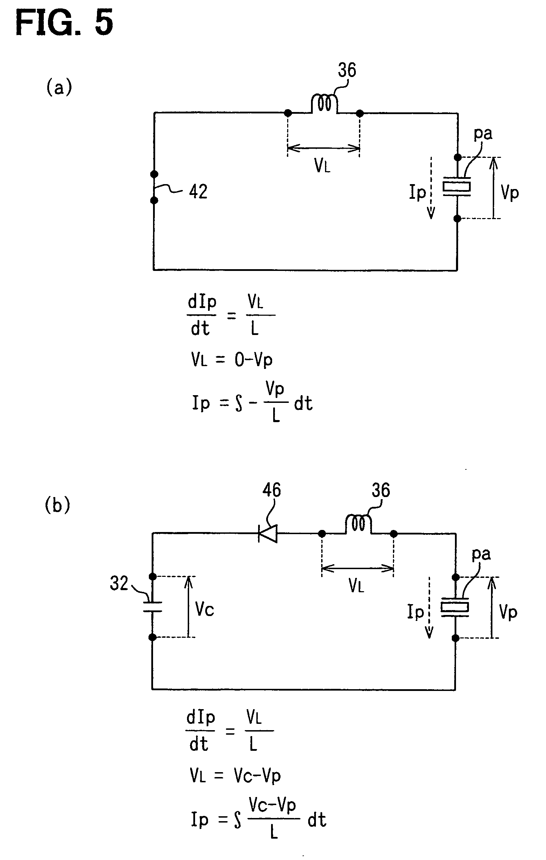

If the injection signal INJE is inverted at timing t3 shown in Fig. 3, the control IC 24 starts on-off operation of the discharging switch 42. For example, on-operation of the discharging switch 42 is performed and a closed loop circuit is formed by the discharging switch 42, the charging-discharging coil 36 and the piezo element pa as shown in Fig. 5(a). Thus, the piezo element pa is discharged. At this time, the current Ip flowing through the piezo element pa increases as shown in Fig. 3 (current increasing operation). After the on-operation of the discharging switch 42, off-operation of the discharging switch 42 is performed and a closed loop circuit is formed by the capacitor 32, the diode 46, the charging-discharging coil 36 and the piezo element pa as shown in Fig. 5(b). Thus, the flywheel energy of the charging-discharging coil 36 is retrieved to the capacitor 32. At this time, the current Ip flowing through the piezo element pa decreases as shown in Fig. 3 (current decreasing operation). In this example embodiment, if the current Ip becomes zero, on-operation of the discharging switch 42 is performed again as shown in Fig. 3.

The voltage boosting chopper control for operating the discharging switch 42 in the above-explained mode is performed. Thus, the piezo element pa is discharged and the voltage Vp on the high-voltage terminal side of the piezo element pa decreases. Equations shown in Figs. 4 and 5 represent relationships among the current Ip flowing through the piezo element pa, inductance L of the charging-discharging coil 36, voltage VL of the charging-discharging coil 36, the voltage Vp of the piezo element pa, and voltage Vc of the capacitor 32.

As shown in Fig. 3, on-operation of the short switch 48 is performed during a period from timing t4 to timing t5 after the discharging of the piezo element pa is completed through the voltage boosting chopper control. Thus, the electric charge of the piezo element pa is completely discharged.

In this example embodiment, as shown in Fig. 3, the charging processing of the piezo element pa is achieved by performing the on-off operation of the charging switch 34 for a predetermined period determined by the charging period signal TCHA. Thus, the control for extending the piezo element PE is performed by open loop control. When the displacement amount of the piezo element PE is controlled to an intended value, the electric state quantity of the piezo element PE correlated with the displacement amount of the piezo element PE is used as a control quantity in this example embodiment.

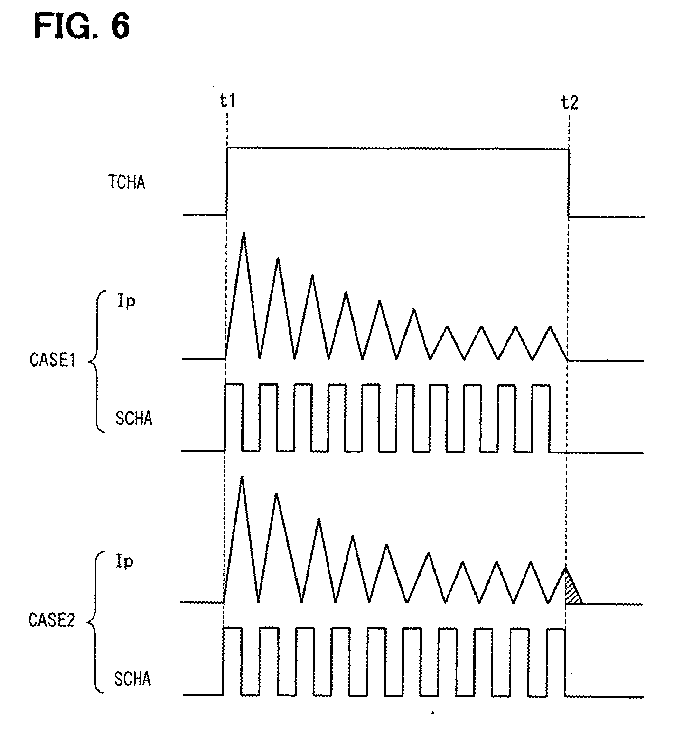

Characteristics of the piezo element PE vary due to an individual difference. The characteristics of the piezo element PE can fluctuate depending on temperature. Therefore, if the open loop control is performed in the above-mentioned mode, there is a possibility that the piezo element PE cannot be controlled to an intended displacement amount (electric state quantity). For example, if the on-off operation of the charging switch 34 is performed from the timing t1 to the timing t2 as shown in Fig. 6, the charged amount will vary between the case 1 where the current becomes zero at the timing t2 due to the off-operation and the case 2 where the operation is switched from the on-operation to the off-operation for the last time at the timing t2.

The maximum variation of the charged amount due to the variation in the characteristics of the piezo element PE and the like can become larger than the entire amount of the current flowing into the piezo element PE from the time when the operation is switched from the on-operation to the off-operation of the charging switch 34 to the time when the current flowing through the piezo element PE becomes zero.

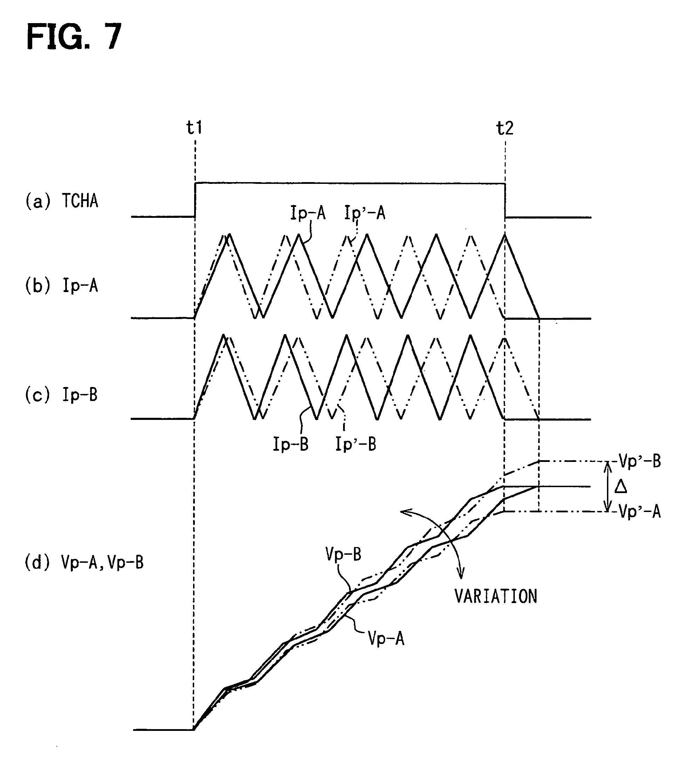

A transition of the charging period signal TCHA is shown in Fig. 7(a). A transition of current Ip-A flowing through an individual body A of the piezo element PE is shown in Fig. 7(b). A transition of current Ip-B flowing through another individual body B of the piezo element PE different from the individual body A is shown in Fig. 7(c). Transitions of voltages Vp-A, Vp-B of the individual bodies A, B are shown in Fig. 7(d). In Fig. 7, the on-operation of the charging switch 34 is performed for a predetermined period. The off-operation of the charging switch 34 is performed until the current becomes zero. Generally, in this case, the maximum value of the current can decrease with time. In Fig. 7, the maximum value of the current is maintained at the same value for the sake of simplicity.

In Fig. 7, the voltage of the piezo element PE is measured when the current flowing through the piezo element PE becomes zero and the voltage of the piezo element PE reaches a stationary state after the timing t2 when the charging period ends. In Fig. 7, the mode of the open loop control is adjusted so that the measurement value of the voltage coincides with an intended value (standard value). Solid lines Ip-A, Ip-B, Vp-A, Vp-B in Fig. 7 represent the currents Ip-A, Ip-B flowing through the piezo elements PE (individual bodies A, B) and the voltages Vp-A, Vp-B of the piezo elements PE (individual bodies A, B) at the time when the adjustment is performed (immediately after the adjustment for adjusting the measurement value to the standard value). Thus, the voltages Vp-A, Vp-B at the time when the measurement is performed coincide with the standard value. However, changes in the voltages Vp-A, Vp-B (changes in the electric state quantities) vary as shown in Fig. 7(d).

Chain double-dashed lines Ip'-A, Ip'-B, Vp'-A, Vp'-B in Fig. 7 represent the currents Ip-A, Ip-B flowing through the piezo elements PE (individual bodies A, B) and the voltages Vp-A, Vp-B of the piezo elements PE (individual bodies A, B) in the case where the characteristics of the individual bodies A, B change due to a change in temperature and the like after the control mode is adjusted through the above-explained mode. As for the individual body A, the operation of the charging switch 34 is switched from the on-operation to the off-operation at the timing t2 when the adjustment is performed as shown by the solid line Ip-A in Fig. 7(b) in this example. After the adjustment, the characteristics of the individual body A change so that the current Ip-A reduces to zero at the timing t2 through the off-operation of the charging switch 34 as shown by the chain double-dashed line Ip'-A in Fig. 7(b) in this example. As for the individual body B, the current Ip-B becomes zero at the timing t2 through the off-operation of the charging switch 34 when the adjustment is performed as shown by the solid line Ip-B in Fig. 7(c) in this example. After the adjustment, the characteristics of the individual body B changes so that the operation of the charging switch 34 is switched from the on-operation to the off-operation at the timing t2 as shown by the chain double-dashed line Ip'-B in Fig. 7(c) in this example. Under such a situation, a large error Δ will be generated between the voltages Vp-A, Vp-B of the individual bodies A, B due to the flywheel current when the above-explained open loop control is completed. The voltage error Δ substantially corresponds to a value twice as large as the entire current amount provided from the time when the operation is switched to the off-operation to the time when the current becomes zero.

Thus, if the control mode is adjusted based on the electric state quantity such as voltage measured when the charged amount of the piezo element PE reaches a stationary state after the on-off operation is ended, a large variation will be caused in the controlled electric state quantity or a change in the electric state quantity.

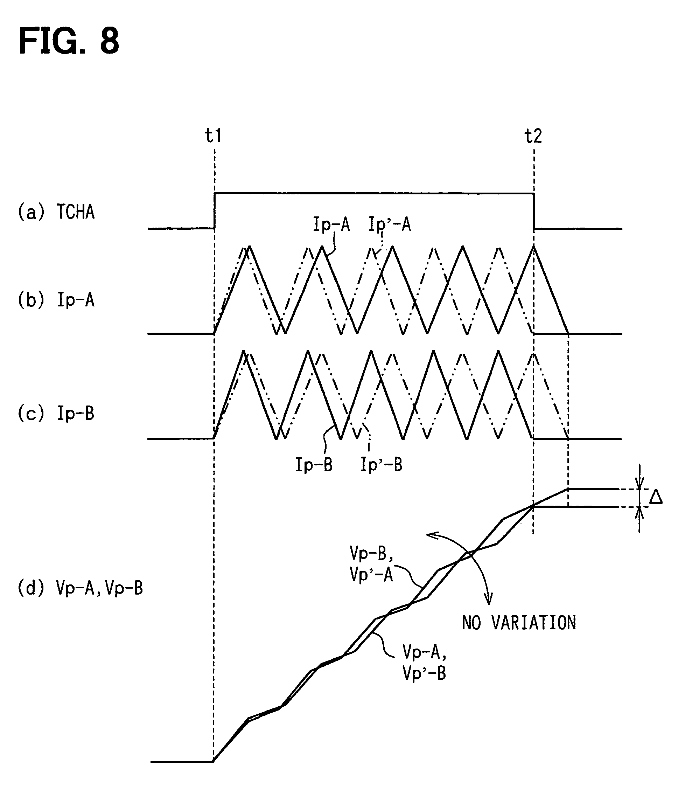

Therefore, in this example embodiment, the mode of the open loop control is adjusted based on the electric state quantity measured in synchronization with the timing t2 when the repetition of the on-off operation ends as shown in Fig. 8. A transition of the charging period signal TCHA is shown in Fig. 8(a). A transition of the current IP-A flowing through the individual body A of the piezo element PE is shown in Fig. 8(b). A transition of the current Ip-B flowing through the individual body B of the piezo element PE is shown in Fig. 8(c). Transitions of the voltages Vp-A, Vp-B of the individual bodies A, B are shown in Fig. 8(d).

In Fig. 8, solid lines Ip-A, Ip-B, Vp-A, Vp-B represent the currents Ip-A, Ip-B flowing through the piezo elements PE (individual bodies A, B) and the voltages Vp-A, Vp-B of the piezo elements PE (individual bodies A, B) at the time when the adjustment is performed. Chain double-dashed lines Ip'-A, Ip'-B, Vp'-A, Vp'-B represent the currents Ip-A, Ip-B, flowing through the piezo elements PE (individual bodies A, B) and the voltages Vp-A, Vp-B of the piezo elements PE (individual bodies A, B) after the adjustment.

In Fig. 8, the chain double-dashed lines Vp'-A, Vp'-B overlap with the solid lines Vp-A, Vp-B. The transition of the voltage Vp-A of the individual body A after the adjustment (to be represented by chain double-dashed line Vp'-A) coincides with the transition of the voltage Vp-B of the individual body B represented by the solid line Vp-B. The transition of the voltage Vp-B of the individual body B after the adjustment (to be represented by chain double-dashed line Vp'-B) coincides with the transition of the voltage Vp-A of the individual body A represented by the solid line Vp-A. Therefore, the error Δ of the voltage due to the flywheel current in the open loop control is inhibited to a degree of the entire current amount provided since the operation is switched to the off-operation for the last time until the current becomes zero. The variation in the change of the voltage (change of the electric state quantity) is also inhibited.

Thus, the electric state quantity of the piezo element PE such as voltage is measured in synchronization with the end timing of the on-off operation and the control mode is adjusted based on the electric state quantity. Thus, the control performance can be improved.

The adjustment of the control mode includes not only the alteration of the charging period or the on-operation period but also alteration of the circuit characteristics of the drive circuit shown in Fig. 2.

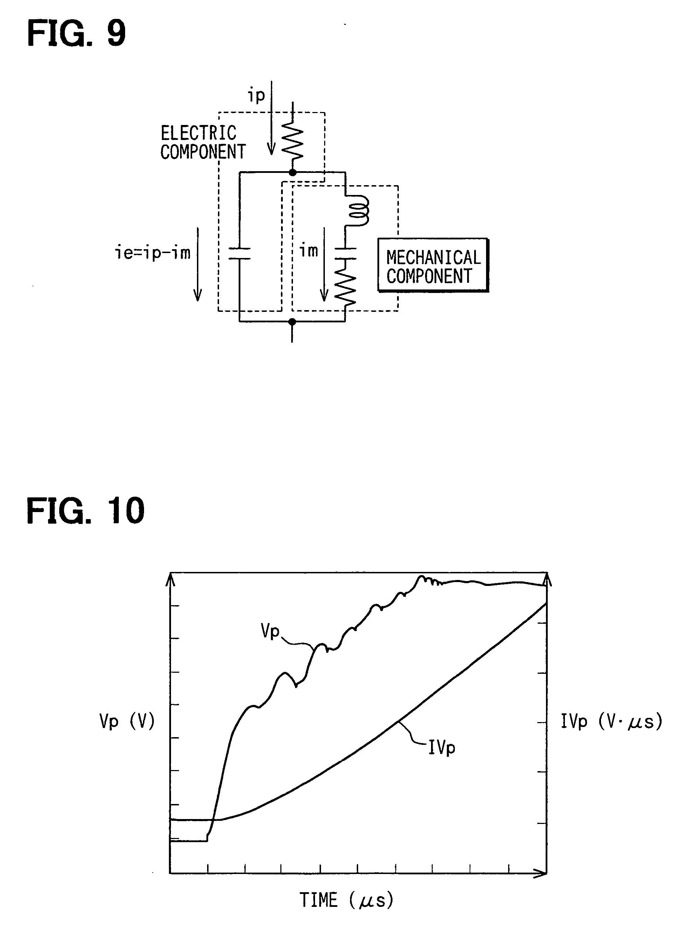

In the case where the voltage is measured at the end timing of the on-off operation, there is a possibility that the voltage cannot be measured accurately because of the fluctuation of the measured voltage. Specifically, the voltage of the piezo element PE is accompanied by voltage oscillation due to a resistance component of the piezo element PE or a piezoelectric phenomenon. It is because the equivalent circuit of the piezo element PE is structured by a mechanical component expressed by a series circuit of LCR (inductance-capacitance-resistance) and an electric component expressed by a capacitor, which is connected to the series circuit of the LCR in parallel, and a series equivalent resistance that is serially connected with the parallel circuit of the capacitor and the LCR series circuit as shown in Fig. 9. Therefore, every time the current flows, voltages at both terminals of the piezo element PE fluctuate due to the voltage generated at the series equivalent resistance. Accordingly, it is difficult to uniquely determine the displacement amount of the piezo element PE based on the measurement of the voltage of the piezo element PE.

Therefore, in this example embodiment, the displacement amount of the piezo element PE (electric state quantity) at the end timing of the on-off operation is measured based on a temporal integration value of the current flowing through the piezo element PE, the voltage of the piezo element PE or a product of the voltage and the current.

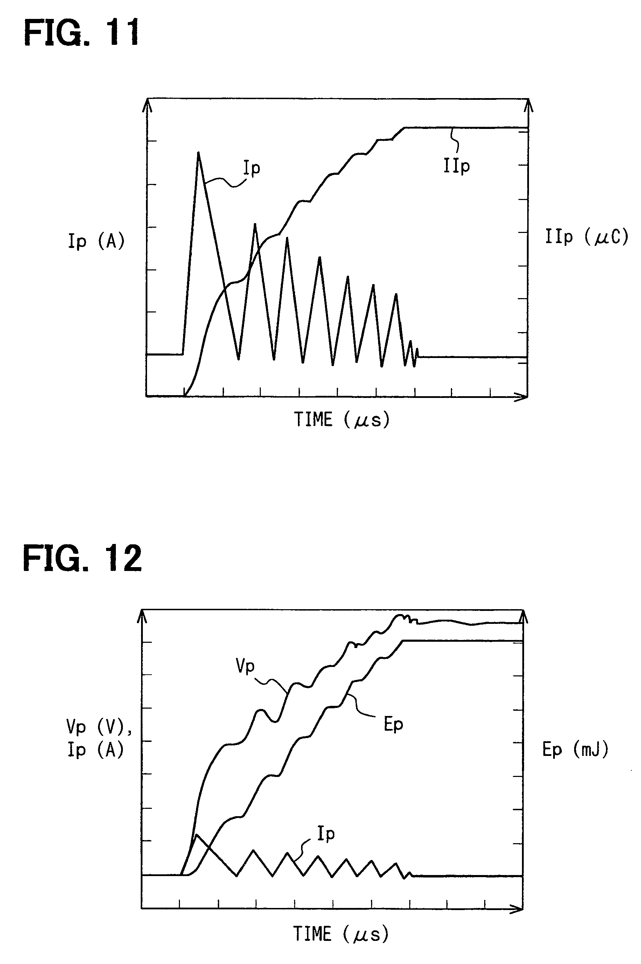

Transitions of the voltage Vp of the piezo element PE and an integration value IVp of the voltage Vp are shown in Fig. 10. Transitions of the current Ip of the piezo element PE and an integration value IIp of the current Ip are shown in Fig. 11. Transitions of the current Ip, the voltage Vp, and an entire energy amount Ep (integration value of a product of the voltage Vp and the current Ip) of the piezo element PE are shown in Fig. 12. As shown in Figs. 10 to 12, influence of the oscillating component on the temporal integration value of the current Ip, the voltage Vp, or the product of the voltage Vp and the current Ip is suppressed. Therefore, the electric state quantity of the piezo element PE can be suitably measured as a unique value. Accordingly, the displacement amount of the piezo element PE can be uniquely determined.

In the example shown in Figs. 10 to 12, the oscillating component of the voltage Vp is eliminated in the integration value IVp of the voltage Vp. Therefore, the integration value IVp of the voltage Vp is easy to handle as the measurement value of the electric state quantity of the piezo element PE.

This example embodiment can provide following effects.
(1) The displacement amount of the piezo element PE is measured based on the temporal integration value of the current flowing through the piezo element PE, the voltage of the piezo element PE or the product of the current and the voltage. Accordingly, the electric state quantity, in which the voltage oscillation and the like are suitably inhibited, is used and the displacement amount of the piezo element PE is appropriately measured as a unique value.
(2) The electric state quantity of the piezo element PE is measured in synchronization with the end timing of the on-off operation of the charging switch 34, and the control mode is adjusted based on the measured state quantity. Accordingly, the variation in the charged amount of the piezo element PE after the on-off operation can be suitably inhibited. As a result, the variation in the displacement amount of the piezo element PE can be suitably inhibited.
(3) The displacement amount of the piezo element PE is controlled by charging and discharging the piezo element PE while increasing and decreasing the current of the piezo element PE through the chopper control. Accordingly, the control of the displacement amount of the piezo element PE can be performed easily.

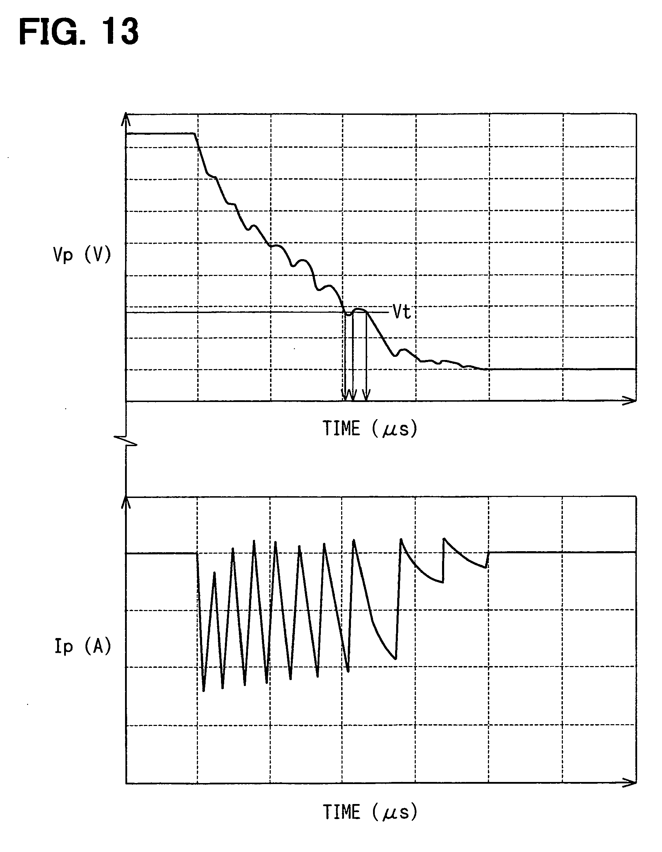

Next, adjusting method of a mode of contracting control of the piezo element PE also according to the first example embodiment of the present invention will be explained with reference to Figs. 13 to 16. A mode of control (discharging control) for decreasing the charged amount of the piezo element PE to zero is adjusted. Specifically, contraction speed (discharging speed) is adjusted. If the discharging speed is measured by measuring a time necessary for the voltage Vp of the piezo element PE to become 0V, a measurement error will increase. It is because it becomes difficult for the current to flow when the voltage Vp of the piezo element PE approaches 0V and it is difficult to decrease the voltage Vp to 0V completely. In order to decrease the voltage Vp of the piezo element PE to 0V completely, the short switch 48 is turned on.

If the electric state quantity of the piezo element PE is measured during the contracting control of the piezo element PE and the discharging speed is measured based on a time necessary for the state quantity to become a predetermined value, there is a possibility that the discharging speed is not uniquely determined due to the oscillation of the voltage Vp of the piezo element PE. Transitions of the voltage Vp of the piezo element PE and the current Ip flowing through the piezo element PE are shown in Fig. 13. As shown in Fig. 13, in the case where the discharging speed (discharging period) is measured based on the time for the voltage Vp of the piezo element PE to decrease to a predetermined voltage Vt higher than zero, the discharging speed is not uniquely determined (three values can be measured as the discharging speed as shown by three arrow marks in Fig. 13).

Therefore, in this example embodiment, the discharging speed of the piezo element PE is measured based on a temporal integration value of the current Ip flowing through the piezo element PE, the voltage Vp of the piezo element PE or a product of the voltage Vp and the current Ip.

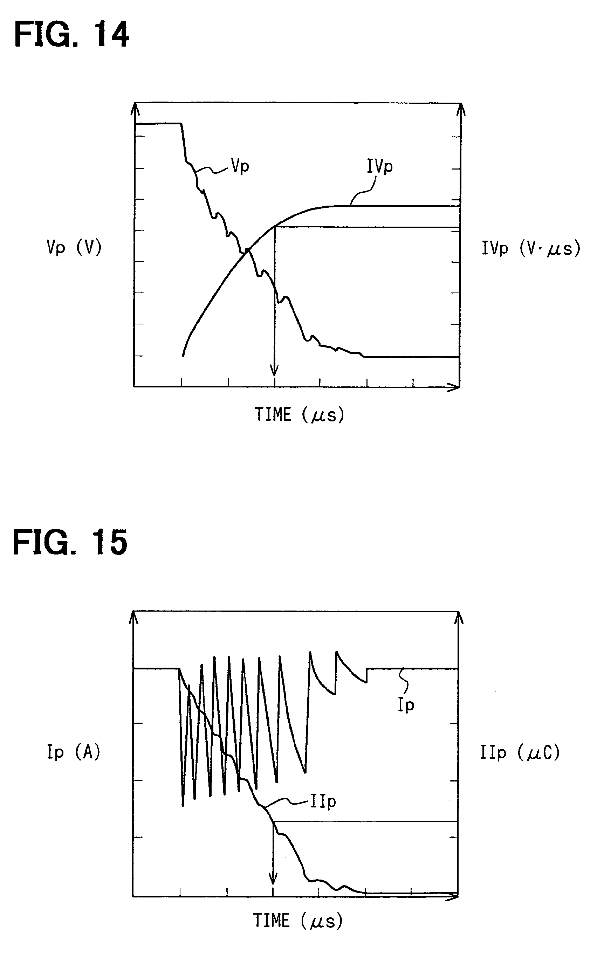

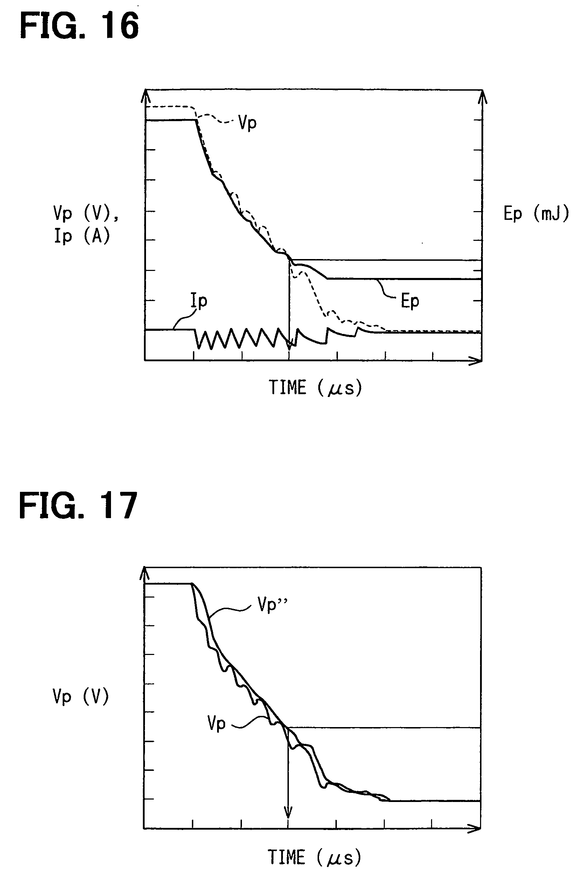

Transitions of the voltage Vp of the piezo element PE and an integration value IVp of the voltage Vp are shown in Fig. 14. Transitions of the current Ip of the piezo element PE and an integration value lip of the current Ip are shown in Fig. 15. Transitions of the current Ip, the voltage Vp, and an entire energy amount Ep (integration value of a product of the voltage Vp and the current Ip) of the piezo element PE are shown in Fig. 16. As shown in Figs. 14 to 16, influence of the oscillating component is inhibited in the temporal integration value of on the current Ip, the voltage Vp, or the product of the voltage Vp and the current Ip. Therefore, the electric state quantity of the piezo element PE can be suitably measured as a unique value. Accordingly, the discharging speed of the piezo element PE can be measured suitably.

In this example embodiment, the discharging speed is measured as a time necessary for the integration value to reach a certain value corresponding to the voltage Vp of the piezo element PE between 10V and 60V. It is because the measurement error of the discharging speed will also increase if too high voltage Vp of the piezo element PE is used.

In addition to the effects (1) to (3) listed before, the following effect is obtained.

(4) The discharging speed is measured as the time for the integration value to reach a certain value corresponding to a certain value between 10V and 60V. Accordingly, the discharging speed can be measured accurately.

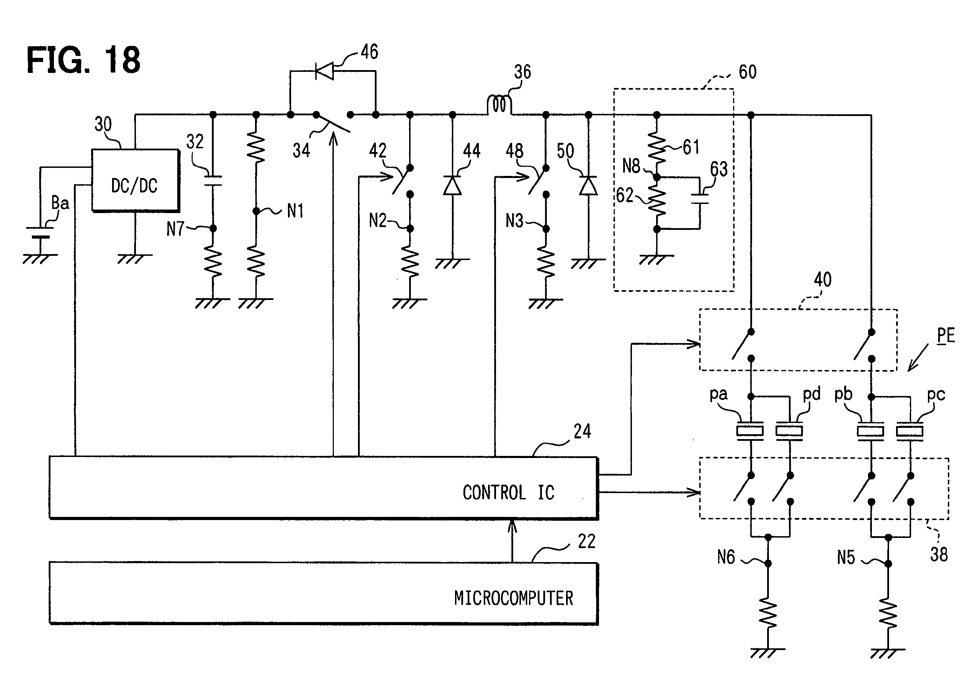

Next, a discharging speed measuring method according to a second example embodiment of the present invention will be explained with reference to Figs. 17 and 18.

In this example embodiment, the voltage of the piezo element PE is used to measure the discharging speed. Smoothing processing is used to eliminate the fluctuation of the measurement value of the displacement amount (electric state quantity) of the piezo element PE due to the voltage signal in the control. Fig. 17 shows transitions of the voltage Vp of the piezo element PE and a smoothed voltage Vp" having undergone the smoothing processing. As shown in Fig. 17, by applying the smoothing processing, the voltage oscillation is eliminated and the discharging speed can be defined uniquely.

The smoothing processing may be performed by an analog circuit such as a CR (capacitance-resistance) circuit or by a digital circuit using a microcomputer and the like. In the case where the smoothing processing is performed by the digital circuit, the change in the voltage Vp cannot be measured appropriately unless operation speeds of the microcomputer, an analog/digital converter, a digital signal processing circuit and the like are relatively high. If the smoothing processing using the analog circuit is employed, appropriate processing can be performed with a simple structure.

This example embodiment can also exert effects similar to those of the first example embodiment.

In the above example embodiments, the integration value of the voltage of the piezo element PE, the current flowing through the piezo element PE or the product of the voltage and the current or the smoothed voltage is employed as the electric state quantity of the piezo element PE to be measured as a value corresponding to the displacement amount of the piezo element PE. The electric state quantity of the piezo element PE is not limited to these. For example, an integration value of a function containing at least one of the current and the voltage as an independent variable may be employed as the electric state quantity of the piezo element PE. Alternatively, a value having undergone processing for eliminating fluctuation of a measurement value of a displacement amount due to voltage oscillation of the piezo element PE may be employed. For example, a function that contains the voltage as the independent variable and has undergone the smoothing processing may be employed.

In the first example embodiment, the displacement amount of the piezo element PE is indirectly measured based on the electric state quantity in synchronization with the end timing of the on-off operation. The measuring method is not limited to this. In the case where the measurement is performed during the control for controlling the displacement amount of the piezo element PE to an intended value, there is a possibility that the displacement amount of the piezo element PE cannot be measured as a unique value due to voltage oscillation of the piezo element PE. Therefore, application of the present invention is effective in such a case.

An effect similar to the effect (1) can be achieved even if the discharging speed is not measured in the voltage range between 10V and 60V in the first or second example embodiment.

In the above example embodiments, the drive device controls the displacement amount of the piezo actuator by the open loop control. Alternatively, the control mode such as an on-operation period may be adjusted through the mode described in the above example embodiments when the drive device is manufactured, and then, the drive device may perform feedback control to finely adjust the control mode.

In the above example embodiments, the displacement amount of the piezo element PE is indirectly measured based on the electric state quantity and the control of the displacement amount is adjusted based on the measurement when the drive device is manufactured. Alternatively, the adjustment may be performed during a period other than the manufacturing of the drive device. That is, even in the case where the control device 20 measures the displacement amount (electric state quantity) of the piezo element PE and adjusts the control mode of the displacement amount of the piezo element PE, there is a possibility that the displacement amount cannot be measured as a unique value due to the voltage oscillation of the piezo element PE when the displacement amount is measured during the control. Therefore, application of the present invention is effective. In this case, in the case where the discharging speed is measured by the processing using the digital circuit as in the second example embodiment, the microcomputer 22 and the like may constitute the digital circuit. In the case where the discharging speed is measured by the processing using the analog circuit as in the second example embodiment, a CR circuit 60 for measuring the voltage of the piezo element PE should be preferably provided as shown in Fig. 18. The CR circuit 60 is connected in parallel to both terminals of the piezo element PE. The CR circuit 60 is structured so that voltage of a connection node N8 of the resistors 61, 62 connected in series is input to the control device 20. A capacitor 63 is connected in parallel to the resistor 62 in order to smooth the voltage of the node N8.

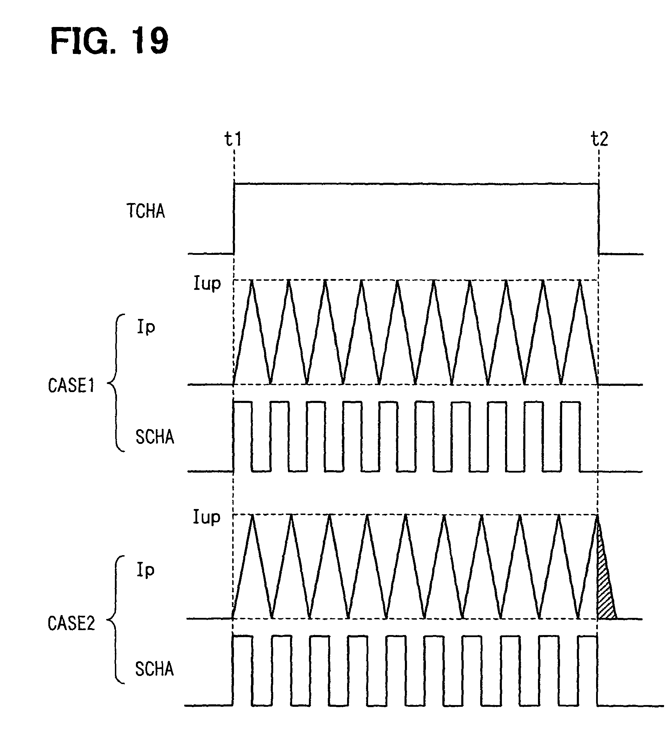

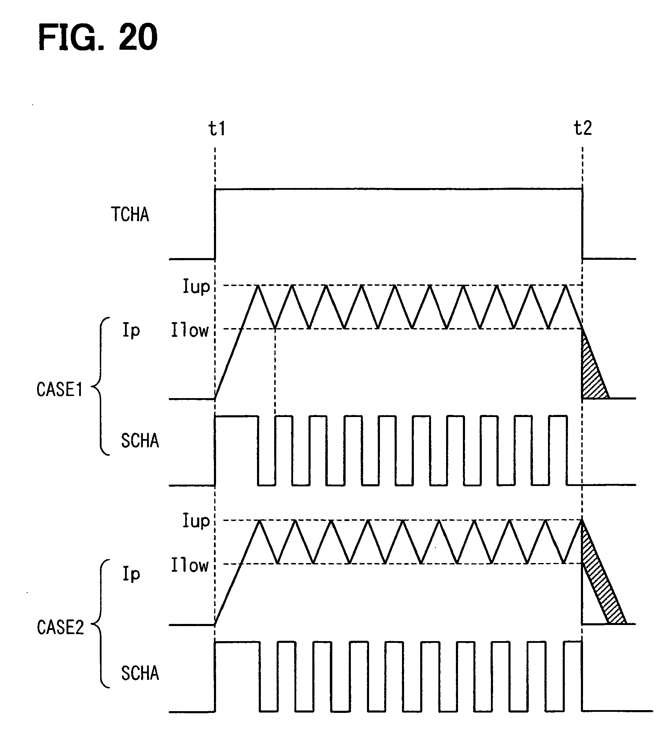

In the chopper control of the above example embodiments, an on-operation period of the switching element (charging switch 34, discharging switch 42) is constant and the switching element is switched from the off-operation to the on-operation at timing when the current flowing through the piezo element PE becomes zero. The chopper control is not limited to this. The on-off operation may be performed in modes shown in Figs. 19 and 20. Fig. 19 illustrates an example in which switching from on-operation to off-operation is performed at timing when the current Ip becomes a predetermined upper limit value Iup and switching from the off-operation to the on-operation is performed at timing when the current Ip becomes zero. Fig. 20 illustrates an example in which switching from on-operation to off-operation is performed at timing when the current Ip becomes a predetermined upper limit value Iup and switching from the off-operation to the on-operation is performed at timing when the current Ip becomes a predetermined lower limit value Ilow that is greater than zero. In both examples, the current flowing after the timing t2, at which the on-off operation is ended, fluctuates as shown in Figs. 19 and 20. Therefore, in these cases, the problem explained with reference to Fig. 7 also exists. Therefore, it is effective to measure the electric state quantity correlated with the displacement amount of the piezo element PE in synchronization with the timing for ending the on-off operation and to adjust the control mode of the displacement amount based on thus-measured state quantity.

In the above example embodiments, the electric state quantity correlated with the displacement amount of the piezo element PE is measured in synchronization with the end timing of the on-off operation. The measuring manner is not limited to this. Any measuring manner may be employed if the control performance can be improved by measuring the electric state quantity of the piezo element PE before the end timing of the on-off operation and by adjusting the control mode of the displacement amount based on the electric state quantity. The measuring point is not limited to one. For example, the electric state quantity may be measured at multiple points, and the control mode may be adjusted to conform the measurement results to intended values (respective standard values), whereby variations in changes of the electric state quantities are reduced.

The control of the electric state quantity of the piezo element PE may be performed by repeating the on-off operation of the switching element (charging switch 34 or discharging switch 42) for a predetermined period, and the electric state quantity may be measured in synchronization with an end of the predetermined period. The predetermined period may be adjusted in the adjustment of the control mode.

The structure of the drive device of the piezo actuator such as the structure of the drive circuit of the piezo actuator may be modified. The piezo actuator is not limited to the piezo actuator that is mounted to the fuel injector of the diesel engine. The control mode of the displacement amount of the piezo element PE is not limited to the mode illustrated in Fig. 3. Any control mode for performing the above-mentioned control by repeating an increasing operation and a decreasing operation of current flowing through the piezo element PE may be employed. For example, the adjustment of the control mode may include adjustment of a mode of at least one of the on-operation and the off-operation of the switching element (charging switch 34 or discharging switch 42).

The present invention should not be limited to the disclosed embodiments, but may be implemented in many other ways without departing from the scope of the invention, as defined by the appended claims.

## Claims

1. A control method, comprising
indirectly measuring a displacement amount of a piezo element (PE) based on an electric state quantity of the piezo element (PE), wherein
the piezo element (PE) functions as an actuator and the displacement amount of the piezo element (PE) is controlled by repeatedly switching between increasing operation and decreasing operation of current flowing through the piezo element (PE) multiple times during a single charging processing or a single discharging processing of the piezo element (PE),
the displacement amount is measured based on the electric state quantity having undergone processing for eliminating a fluctuation of a measurement value of the displacement amount due to voltage oscillation of the piezo element (PE) in the control, and
the measurement of the displacement amount is performed to grasp contracting speed of the piezo element (PE) during the control of the displacement amount for contracting the piezo element (PE) performed by discharging an electric charge charged to the piezo element (PE).

2. The control method as in claim 1, wherein the measurement is performed by measuring a temporal integration value of a function containing the voltage of the piezo element (PE) as an independent variable.

3. The control method as in claim 1, wherein the measurement is performed by measuring a smoothed value of a function that contains the voltage of the piezo element (PE) as an independent variable.

4. The control method as in claim 3, wherein the smoothed value is the voltage of the piezo element (PE) having undergone smoothing processing performed by at least one of a smoothing circuit (60) and software.

5. The control method as in claim 1, wherein the contracting speed is grasped as a time necessary for the piezo element (PE) to contract to a degree corresponding to a certain value of the voltage of the piezo element (PE) between 10V and 60V.

6. The control method as in any one of claims 1 to 5, wherein
the increasing operation is performed as operation for turning on a switching element (34, 42) in chopper control, and
the decreasing operation is performed as operation for turning off the switching element (34, 42) in the chopper control.

7. The control method as in claim 1, further comprising
adjusting a mode of the control, through which the displacement amount of the piezo element (PE) is controlled while current flowing through the piezo element (PE) is increased and decreased, the piezo element (PE) functioning as the actuator through repetition of on-operation and off-operation of a switching element (34, 42) in chopper control,
measuring the electric state quantity of the piezo element (PE) correlated with the displacement amount before an end of the repetition of the on-operation and the off-operation, and
adjusting the mode of the control based on a result of the measuring of the electric state quantity.

8. The control method as in claim 7, wherein the adjusting of the mode of the control is performed to conform the result of the measuring of the electric state quantity to a standard value.

9. The control method as in claim 7 or 8, wherein the adjustment of the mode of the control is performed by charging processing of the piezo element (PE).

10. The control method as in any one of claims 7 to 9, wherein the measuring is performed in synchronization with the end timing of the repetition of the on-operation and the off-operation.

11. The control method as in claim 10, wherein
the state quantity is controlled by repeating the on-operation and the off-operation for a predetermined period, which is set beforehand, and
the measuring is performed in synchronization with an end of the predetermined period.

12. The control method as in claim 11, wherein the adjusting of the mode of the control includes adjustment of the predetermined period.

13. The control method as in any one of claims 7 to 12, wherein the adjusting of the mode of the control includes adjustment of a mode of at least one of the on-operation and the off-operation.

14. The control method as in any one of claims 7 to 13, wherein the measuring is performed after processing for eliminating a fluctuation of a measurement value of the state quantity due to the voltage oscillation of the piezo element (PE) in the control.

15. The control method as in any one of claims 7 to 13, wherein the measuring is performed by measuring a temporal integration value of a function that contains at least one of the current flowing through the piezo element (PE) and voltage of the piezo element (PE) as an independent variable.

16. A drive device (20) for controlling a displacement amount of a piezo element (PE), which functions as an actuator, by repeatedly switching between increasing operation and decreasing operation of current flowing through the piezo element (PE) multiple times during a single charging processing or a single discharging processing of the piezo element (PE), comprising:
means adapted to measure the displacement amount based on an electric state quantity having undergone processing for eliminating a fluctuation of a measurement value of the displacement amount due to voltage oscillation of the piezo element (PE) in the control, and
means adapted to grasp from the measurement of the displacement amount a contracting speed of the piezo element (PE) during the control of the displacement amount for contracting the piezo element (PE) performed_by discharging an electric charge charged to the piezo element (PE).

17. The drive device (20) as in claim 16, wherein the drive device (20) is structured so that a mode of the control is adjusted based on the displacement amount measured after the processing for eliminating the fluctuation of the measurement value of the displacement amount due to the voltage oscillation of the piezo element (PE) in the control.

18. The drive device (20) as in claim 16, wherein
the piezo element (PE) functions as the actuator through repetition of on-operation and off-operation of a switching element (34, 42) in chopper control,
the drive device (20) measures an electric state quantity of the piezo element (PE) correlated with the displacement amount before an end of the repetition of the on-operation and the off-operation, and
the drive device (20) adjusts a mode of the control based on a result of the measurement of the electric state quantity.

19. The drive device (20) as in claim 16, wherein
the piezo element (PE) functions as the actuator through repetition of on-operation and off-operation of a switching element (34, 42) in chopper control,
the drive device (20) is structured so that a mode of the control is adjusted based on an electric state quantity of the piezo element (PE), and
the electric state quantity is correlated with the displacement amount and is measured before an end of the repetition of the on-operation and the off-operation.

## Patentansprüche

1. Steuerungsverfahren, mit:
indirektem Messen eines Verschiebungsbetrags eines Piezoelements (PE) basierend auf einem Maß eines elektrischen Zustands des Piezoelements (PE), wobei
das Piezoelement (PE) als ein Aktor fungiert und der Verschiebungsbetrag des Piezoelements (PE) durch wiederholtes Umschalten zwischen einem Erhöhungsbetrieb und einem Verringerungsbetrieb eines durch das Piezoelement (PE) mehrmals während einer Einzelladeverarbeitung oder einer Einzelentladeverarbeitung des Piezoelements (PE) fließenden Stroms gesteuert wird,
der Verschiebungsbetrag basierend auf dem Maß des elektrischen Zustands gemessen wird, das einer Verarbeitung zum Eliminieren einer Fluktuation eines Messwerts des Verschiebungsbetrags aufgrund einer Spannungsoszillation des Piezoelements (PE) während der Steuerung unterzogen wurde, und
die Messung des Verschiebungsbetrags durchgeführt wird, um eine Kontrahierungsgeschwindigkeit des Piezoelements (PE) während der Steuerung des Verschiebungsbetrags zum Kontrahieren des Piezoelements (PE) zu erfassen, die durch Entladen einer auf das Piezoelement (PE) geladenen elektrischen Ladung durchgeführt wird.

2. Steuerungsverfahren gemäß Anspruch 1, wobei die Messung durch Messen eines zeitlichen Integrationswerts einer Funktion durchgeführt wird, die die Spannung des Piezoelements (PE) als eine unabhängige Variable enthält.

3. Steuerungsverfahren gemäß Anspruch 1, wobei die Messung durch Messen eines geglätteten Werts einer Funktion durchgeführt wird, die die Spannung des Piezoelements (PE) als eine unabhängige Variable enthält.

4. Steuerungsverfahren gemäß Anspruch 3, wobei der geglättete Wert die Spannung des Piezoelements (PE) darstellt, die einer von zumindest einer aus einer Glättungsschaltung (60) und einer Software durchgeführten Glättungsverarbeitung unterzogen wurde.

5. Steuerungsverfahren gemäß Anspruch 1, wobei die Kontrahierungsgeschwindigkeit als eine für das Piezoelement (PE) notwendige Zeit zum Kontrahieren auf einen Grad erfasst wird, der einem bestimmten Spannungswert des Piezoelements (PE) zwischen 10V und 60V entspricht.

6. Steuerungsverfahren gemäß einem der Ansprüche 1 bis 5, wobei
der Erhöhungsbetrieb als Betrieb zum Einschalten eines Umschaltelements (34, 42) während einer Chopper-Steuerung durchgeführt wird, und
der Verringerungsbetrieb als Betrieb zum Ausschalten des Umschaltelements (34, 42) während der Chopper-Steuerung durchgeführt wird.

7. Steuerungsverfahren gemäß Anspruch 1, ferner mit:
Einstellen einer Betriebsart der Steuerung, durch die der Verschiebungsbetrag des Piezoelements (PE) gesteuert wird, während ein durch das Piezoelement (PE) fließender Strom erhöht und verringert wird, wobei das Piezoelement (PE) als der Aktor durch Wiederholung eines Ein-Betriebs und eines Aus-Betriebs eines Umschaltelements (34, 42) während einer Chopper-Steuerung fungiert,
Messen des Maßes des elektrischen Zustands des mit dem Verschiebungsbetrag korrelierten Piezoelements (PE) vor einem Ende der Wiederholung des Ein-Betriebs und des Aus-Betriebs, und
Einstellen der Betriebsart der Steuerung basierend auf einem Ergebnis des Messens des Maßes des elektrischen Zustands.

8. Steuerungsverfahren gemäß Anspruch 7, wobei das Einstellen der Betriebsart der Steuerung zum Angleichen des Ergebnisses des Messens des Maßes des elektrischen Zustands mit einem Standardwert durchgeführt wird.

9. Steuerungsverfahren gemäß Anspruch 7 oder 8, wobei die Einstellung der Betriebsart der Steuerung durch eine Ladeverarbeitung des Piezoelements (PE) durchgeführt wird.

10. Steuerungsverfahren gemäß einem der Ansprüche 7 bis 9, wobei das Messen in Synchronisation mit dem Endzeitpunkt der Wiederholung des Ein-Betriebs und des Aus-Betriebs durchgeführt wird.

11. Steuerungsverfahren gemäß Anspruch 10, wobei
das Maß des Zustands durch Wiederholen des Ein-Betriebs und des Aus-Betriebs für eine vorbestimmte Periode, die vorher eingestellt wurde, gesteuert wird, und
das Messen in Synchronisation mit einem Ende der vorbestimmten Periode durchgeführt wird.

12. Steuerungsverfahren gemäß Anspruch 11, wobei das Einstellen der Betriebsart der Steuerung eine Einstellung der vorbestimmten Periode umfasst.

13. Steuerungsverfahren gemäß einem der Ansprüche 7 bis 12, wobei das Einstellen der Betriebsart der Steuerung eine Einstellung einer Betriebsart von zumindest einem des Ein-Betriebs und des Aus-Betriebs umfasst.

14. Steuerungsverfahren gemäß einem der Ansprüche 7 bis 13, wobei das Messen nach einer Verarbeitung zum Eliminieren einer Fluktuation eines Messwerts des Maßes des Zustands aufgrund der Spannungsoszillation des Piezoelements (PE) während der Steuerung durchgeführt wird.

15. Steuerungsverfahren gemäß einem der Ansprüche 7 bis 13, wobei das Messen durch Messen eines zeitlichen Integrationswerts einer Funktion durchgeführt wird, die zumindest eines von dem durch das Piezoelement (PE) fließenden Strom und der Spannung des Piezoelements (PE) als eine unabhängige Variable enthält.

16. Antriebsvorrichtung (20) zum Steuern eines Verschiebungsbetrags eines Piezoelements (PE), das als ein Aktor fungiert, durch wiederholtes Umschalten zwischen einem Erhöhungsbetrieb und einem Verringerungsbetrieb eines durch das Piezoelement (PE) mehrmals während einer Einzelladeverarbeitung oder einer Einzelentladeverarbeitung des Piezoelements (PE) fließenden Stroms, mit:
einer Einrichtung, die zum Messen des Verschiebungsbetrags basierend auf einem Maß eines elektrischen Zustands angepasst ist, das einer Verarbeitung zum Eliminieren einer Fluktuation eines Messwerts des Verschiebungsbetrags aufgrund einer Spannungsoszillation des Piezoelements (PE) während der Steuerung unterzogen wurde, und
einer Einrichtung, die angepasst ist, um aus der Messung des Verschiebungsbetrags eine Kontrahierungsgeschwindigkeit des Piezoelements (PE) während der Steuerung des Verschiebungsbetrags zum Kontrahieren des Piezoelements (PE) zu erfassen, die durch Entladen einer auf das Piezoelement (PE) geladenen elektrischen Ladung durchgeführt wird.

17. Antriebsvorrichtung (20) gemäß Anspruch 16, wobei die Antriebsvorrichtung (20) so strukturiert ist, dass eine Betriebsart der Steuerung basierend auf dem Verschiebungsbetrag eingestellt wird, der nach der Verarbeitung zum Eliminieren der Fluktuation des Messwerts des Verschiebungsbetrags aufgrund der Spannungsoszillation des Piezoelements (PE) während der Steuerung gemessen wird.

18. Antriebsvorrichtung (20) gemäß Anspruch 16, wobei
das Piezoelement (PE) als der Aktor durch Wiederholung eines Ein-Betriebs und eines Aus-Betriebs eines Umschaltelements (34, 42) während einer Chopper-Steuerung fungiert,
die Antriebsvorrichtung (20) ein Maß eines elektrischen Zustands des Piezoelements (PE) misst, das mit dem Verschiebungsbetrag vor einem Ende der Wiederholung des Ein-Betriebs und des Aus-Betriebs korreliert ist, und
die Antriebsvorrichtung (20) eine Betriebsart der Steuerung basierend auf einem Ergebnis der Messung des Maßes des elektrischen Zustands einstellt.

19. Antriebsvorrichtung (20) gemäß Anspruch 16, wobei
das Piezoelement (PE) als der Aktor durch Wiederholung eines Ein-Betriebs und eines Aus-Betriebs eines Umschaltelements (34, 42) während einer Chopper-Steuerung fungiert,
die Antriebsvorrichtung (20) so strukturiert ist, dass eine Betriebart der Steuerung basierend auf einem Maß eines elektrischen Zustands des Piezoelements (PE) eingestellt wird, und
das Maß des elektrischen Zustands mit dem Verschiebungsbetrag korreliert ist und vor einem Ende der Wiederholung des Ein-Betriebs und des Aus-Betriebs gemessen wird.

## Revendications

1. Méthode de contrôle, comprenant
la mesure indirecte d'une quantité de déplacement d'un élément piézoélectrique (PE) basée sur une quantité d'état électrique de l'élément piézoélectrique (PE), dans laquelle
l'élément piézoélectrique (PE) fonctionne comme un actionneur et la quantité de déplacement de l'élément piézoélectrique (PE) est contrôlée en commutant de manière répétitive entre une opération d'augmentation et une opération de diminution du courant s'écoulant à travers l'élément piézoélectrique (PE) plusieurs fois pendant un seul traitement de chargement ou un seul traitement de déchargement de l'élément piézoélectrique (PE),
la quantité de déplacement est mesurée sur la base de la quantité d'état électrique ayant subi un traitement pour éliminer une fluctuation d'une valeur de mesure de la quantité de déplacement due à l'oscillation de la tension de l'élément piézoélectrique (PE) dans le contrôle, et
la mesure de la quantité de déplacement est réalisée pour obtenir la vitesse de contraction de l'élément piézoélectrique (PE) pendant le contrôle de la quantité de déplacement pour contracter l'élément piézoélectrique (PE) réalisé en déchargeant une charge électrique chargée dans l'élément piézoélectrique (PE).

2. Méthode de contrôle selon la revendication 1, dans laquelle la mesure est réalisée en mesurant une valeur d'intégration temporelle d'une fonction contenant la tension de l'élément piézoélectrique (PE) comme une variable indépendante.

3. Méthode de contrôle selon la revendication 1, dans laquelle la mesure est réalisée en mesurant une valeur lissée d'une fonction contenant la tension de l'élément piézoélectrique (PE) comme une variable indépendante.

4. Méthode de contrôle selon la revendication 3, dans laquelle la valeur lissée est la tension de l'élément piézoélectrique (PE) ayant subi un traitement de lissage réalisé par au moins l'un d'un circuit de lissage (60) et d'un logiciel.

5. Méthode de contrôle selon la revendication 1, dans laquelle la vitesse de contraction est obtenue comme la durée nécessaire pour que l'élément piézoélectrique (PE) se contracte à un degré correspondant à une certaine valeur de la tension de l'élément piézoélectrique (PE) entre 10 V et 60 V.

6. Méthode de contrôle selon l'une quelconque des revendications 1 à 5, dans laquelle
l'opération d'augmentation est réalisée comme une opération de mise en marche d'un élément de commutation (34, 42) dans un contrôle de hacheur, et
l'opération de diminution est réalisée comme une opération d'arrêt de l'élément de commutation (34, 42) dans le contrôle de hacheur.

7. Méthode de contrôle selon la revendication 1, comprenant également :
l'ajustement d'un mode du contrôle, à travers lequel la quantité de déplacement de l'élément piézoélectrique (PE) est contrôlée pendant que le courant s'écoulant à travers l'élément piézoélectrique (PE) est augmenté et réduit, l'élément piézoélectrique (PE) fonctionnant comme l'actionneur par la répétition des opérations de mise en marche et d'arrêt d'un élément de commutation (34, 42) dans le contrôle de hacheur,
la mesure de la quantité de l'état électrique de l'élément piézoélectrique (PE) corrélée avec la quantité de déplacement avant la fin de la répétition des opérations de mise en marche et d'arrêt, et
l'ajustement du mode du contrôle sur la base d'un résultat de la mesure de la quantité de l'état électrique.

8. Méthode de contrôle selon la revendication 7, dans laquelle l'ajustement du mode de contrôle est réalisé pour conformer le résultat de la mesure de la quantité de l'état électrique à une valeur standard.

9. Méthode de contrôle selon les revendications 7 ou 8, dans laquelle l'ajustement du mode de contrôle est réalisé par le traitement de chargement de l'élément piézoélectrique (PE).

10. Méthode de contrôle selon l'une quelconque des revendications 7 à 9, dans laquelle la mesure est réalisée en synchronisation avec la temporisation de fin de la répétition des opérations de mise en marche et d'arrêt.

11. Méthode de contrôle selon la revendication 10, dans laquelle
la quantité de l'état est contrôlée en répétant les opérations de mise en marche et d'arrêt pour une durée prédéterminée, qui est fixée à l'avance, et
la mesure est réalisée en synchronisation avec une fin de la durée prédéterminée.

12. Méthode de contrôle selon la revendication 11, dans laquelle l'ajustement du mode du contrôle comprend l'ajustement de la durée prédéterminée.

13. Méthode de contrôle selon l'une quelconque des revendications 7 à 12, dans laquelle l'ajustement du mode du contrôle comprend l'ajustement d'un mode d'au moins l'une des opérations de mise en marche et d'arrêt.

14. Méthode de contrôle selon l'une quelconque des revendications 7 à 13, dans laquelle la mesure est réalisée après le traitement pour éliminer une fluctuation d'une valeur de mesure de la quantité de l'état due à l'oscillation de la tension de l'élément piézoélectrique (PE) dans le contrôle.

15. Méthode de contrôle selon l'une quelconque des revendications 7 à 13, dans laquelle la mesure est réalisée en mesurant une valeur d'intégration temporelle d'une fonction contenant au moins l'un du courant s'écoulant à travers l'élément piézoélectrique (PE) et la tension de l'élément piézoélectrique (PE) comme une variable indépendante.

16. Dispositif d'excitation (20) pour contrôler une quantité de déplacement d'un élément piézoélectrique (PE), fonctionnant comme un actionneur, en commutant de manière répétitive entre une opération d'augmentation et une opération de diminution du courant s'écoulant à travers l'élément piézoélectrique (PE) plusieurs fois pendant un seul traitement de chargement ou un seul traitement de déchargement de l'élément piézoélectrique (PE), comprenant :
un moyen adapté pour mesurer la quantité de déplacement basée sur une quantité d'état électrique ayant subi un traitement pour éliminer une fluctuation d'une valeur de mesure de la quantité de déplacement due à l'oscillation de la tension de l'élément piézoélectrique (PE) dans le contrôle, et
un moyen adapté pour obtenir à partir de la mesure de la quantité de déplacement une vitesse de contraction de l'élément piézoélectrique (PE) pendant le contrôle de la quantité de déplacement pour contracter l'élément piézoélectrique (PE) réalisé en déchargeant une charge électrique chargée dans l'élément piézoélectrique (PE).

17. Dispositif d'excitation (20) selon la revendication 16, dans lequel le dispositif d'excitation (20) est structuré de telle sorte qu'un mode de contrôle soit ajusté sur la base de la quantité de déplacement mesurée après le traitement pour éliminer la fluctuation de la valeur de mesure de la quantité de déplacement due à l'oscillation de la tension de l'élément piézoélectrique (PE) dans le contrôle.

18. Dispositif d'excitation (20) selon la revendication 16, dans lequel :
l'élément piézoélectrique (PE) fonctionne comme actionneur à travers la répétition des opérations de mise en marche et d'arrêt d'un élément de commutation (34, 42) dans le contrôle de hacheur,
le dispositif d'excitation (20) mesure une quantité d'état électrique de l'élément piézoélectrique (PE) corrélée avec la quantité de déplacement avant la fin de la répétition des opérations de mise en marche et d'arrêt, et
le dispositif d'excitation (20) ajuste un mode du contrôle sur la base d'un résultat de la mesure de la quantité de l'état électrique.

19. Dispositif d'excitation (20) selon la revendication 16, dans lequel :
l'élément piézoélectrique (PE) fonctionne comme un actionneur par la répétition des opérations de mise en marche et d'arrêt d'un élément de commutation (34, 42) dans le contrôle de hacheur,
le dispositif d'excitation (20) est structuré de telle sorte qu'un mode du contrôle soit ajusté sur la base d'une quantité d'état électrique de l'élément piézoélectrique (PE), et
la quantité de l'état électrique est corrélée avec la quantité de déplacement et est mesurée avant la fin de la répétition des opérations de mise en marche et d'arrêt.
